# EUROPÄISCHE PATENTANMELDUNG

(11) **EP 1 028 345 A1**
(43) Veröffentlichungstag der Anmeldung: **16.08.2000**
(21) Anmeldenummer: 00102620.2
(22) Anmeldetag: 08.02.2000
(51) Int. Cl.: G02C 3/04, G02B 3/00, A63H 33/22

(54) **Fliegenaugenbrille**

(30) Priorität: 11.02.1999 DE 29902409 U
(71) Anmelder: WERKHAUS - DESIGN + PRODUKTION GmbH, 29562 Suhlendorf (DE)
(72) Erfinder: Danneberg, Holger, 29562 Suhlendorf (DE)
(74) Vertreter: Wilhelms, Rolf E., Dr.

(57) **Zusammenfassung**

Die vorliegende Erfindung betrifft eine Fliegenaugenbrille mit zwei Linsen, von denen zumindest eine mit einer Anzahl von mehr als zwei Facettenfeldern facettiert ist.

## Beschreibung

Die Neuerung betrifft ein neuartiges Spielzeug, das im folgenden als Fliegenaugenbrille bezeichnet wird.

Die neue Fliegenaugenbrille weist zwei facettierte Linsen auf, bevorzugt in einem flächigen Träger, der vorzugsweise eine Stärke von etwa 1 bis 5 mm aufweist und dessen Fläche das etwa 2- bis 6-fache der Linsenfläche beträgt. Bevorzugte Ausgestaltung der neuerungsgemäßen Fliegenaugenbrille ist eine sogenannte Stielbrille (Lorgnette), wobei der Stiel in Form eines Brettchens ausgebildet sein kann, das zur Aufbringung von Dekormustern oder Reklameauf drucken besonders geeignet ist. Eine weitere Ausgestaltung ist eine an sich übliche Brille mit Brillengestell oder mit umlaufendem Gummiband (Goggles), in denen die facettierten Linsen angeordnet sind.

Das Linsenglas ist, wie ein Fliegenauge, in eine Vielzahl von Facetten aufgeteilt, die jeweils einzeln bei Durchsicht den betrachteten Gegenstand wiedergeben, so daß sich dem Betrachter der Gegenstand in der Anzahl der Segmente entsprechender vielfacher Wiedergabe darstellt.

Je nach Ausführungsform des Linsenglases können die einzelnen Facetten in gleicher Weise vergrößern, verkleinern oder den Gegenstand unvergrößert oder unverkleinert wiedergeben; in einer besonderen Ausführungsform können die einzelnen Facetten jedoch auch abweichend voneinander ausgebildet sein, so daß bei Durchsicht beispielsweise ein Ring von Facetten vergrößert, während die restlichen Facetten verkleinern oder umgekehrt oder vermischt. Es ist auch denkbar verschieden facettierte Linsen oder eine facettierte Linse mit einer üblichen Linse in der Brille anzuordnen.

In der Ausführungsform der Brille mit flächigem Träger bietet die flächige Ausbildung in nahezu beliebiger Form eine geeignete Unterlage für vielfältige graphische oder werbemäßige Gestaltungsmöglichkeiten.

Die Neuerung wird anhand der angefügten Figuren näher erläutert:
Figur 1 ist eine Aufsicht auf eine flächenförmige Ausführungsform der neuerungsgemäßen Fliegenaugenbrille als Stielbrille (Lorgnette),
und Figur 2 ein Querschnitt durch die neuerungsgemäße Fliegenaugenbrille im Bereich einer Linse.

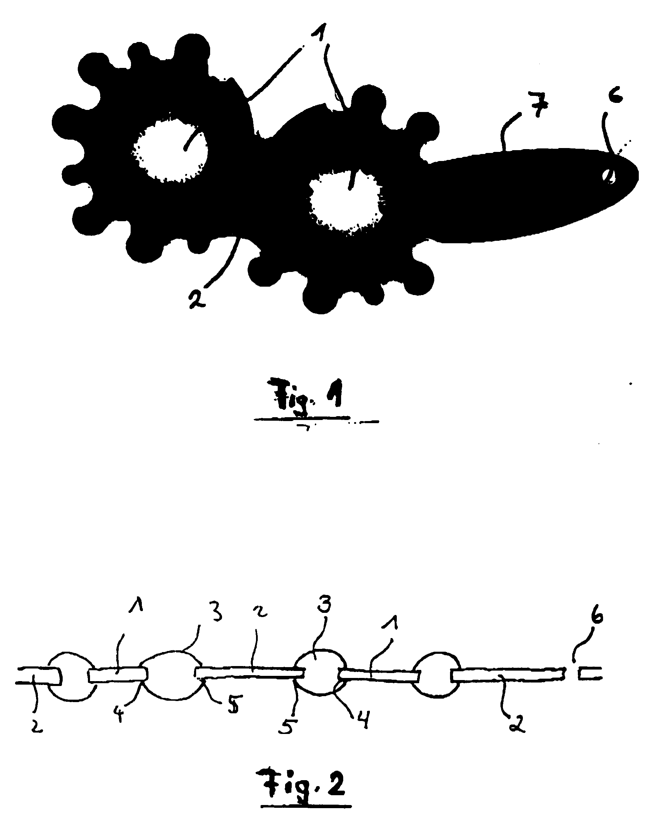

Gemäß Figur 1 weist die neuerungsgemäße Fliegenaugenbrille zwei in Facetten unterteilten Linsen 1 auf, wobei bevorzugt facettierte Kaleidoskoplinsen verwendet werden.

Die Linsen 1 sind in einem flächigen Träger 2 mit achtförmigem Umriß eingelassen, der bevorzugt ein 2-faches oder mehrfaches der Fläche der Linsen ausmacht, wobei hierbei von einem Linsendurchmesser von etwa 3 cm ausgegangen wird; der Linsenabstand entspricht mittlerem Augenabstand.

Die bevorzugt Stielbrillenausbildung gemäß Figur 1 weist einen brettchenförmigen Handgriff 7 auf, der ein Loch oder eine Öse 6 aufweist, durch die ein Halsband oder eine Halskette zum Umhängen der Fliegenaugenbrille geführt ist. Bei Bedarf ist der Handgriff 7 als Werbefläche gestaltet.

Die Fixierung der Linsen 1 im Träger 2 in den entsprechenden Ausnehmungen kann in an sich bekannter Weise durch Verkleben, Einpressen oder (bei Ausbildung in Kunststoff) Einschweißen erfolgen; bevorzugt sind sie gemäß Figur 2 in der Innennut 4 eines umlaufenden elastischen Ringes 3 aus Gummi oder Kunststoff fixiert, während der umlaufende Rand der Ausnehmung im Träger 2 in einer außen umlaufenden Nut 5 des elastischen Ringes gelagert ist.

Auf diese Weise ist es möglich, die Fliegenaugenbrille auch als einfachen Bausatz zum Zusammenbau durch kleine Kinder auszubilden.

## Patentansprüche

1. Fliegenaugenbrille mit zwei Linsen, von denen zumindest eine mit einer Anzahl von mehr als zwei Facettenfeldern facettiert ist.

2. Fliegenaugenbrille gemäß Anspruch 1, dadurch gekennzeichnet, daß zumindest eine Linse eine an sich bekannte Kaleidoskoplinse ist.

3. Fliegenaugenbrille gemäß Anspruch 1 und/oder 2, dadurch gekennzeichnet, daß die Linsen in Augenabstand voneinander in einen flächigen Träger (2) einer Stärke von etwa 1 bis 5 mm und einer Fläche, die etwa der 2-fachen oder mehr Linsenfläche entsprechen, eingelassen sind.

4. Fliegenaugenbrille nach einem der Ansprüche 1 bis 3, dadurch gekennzeichnet, daß die Brille in Form einer Stielbrille (Fig.1) ausgebildet ist.

5. Fliegenaugenbrille nach einem der vorhergehenden Ansprüche, dadurch gekennzeichnet, daß sie jeweils zwei ringförmige Gummiwulst (3) aufweist, die eine innen umlaufende Nut (4) zur fixierenden Aufnahme des Randbereichs der Linsen (1) und eine außen umlaufende Nut(5) zur fixierenden Aufnahme des Randes der entsprechenden kreisförmigen Aussparungen im flächigen Träger (2) aufweist.

6. Fliegenaugenbrille gemäß Anspruch 4, dadurch gekennzeichnet, daß der Stiel brettchenförmig mit einer Länge von etwa 10 cm und einer Breite von etwa 3 cm ausgebildet ist.

7. Fliegenaugenbrille als Bausatz, bestehend aus Träger (2), 2 Linsen (1), 2 Gummiwülsten (3) als Einzelteile und gemäß mindestens einem der vorhergehenden Ansprüche.
